# EUROPEAN PATENT SPECIFICATION

(11) **EP 2 466 802 B1**
(45) Date of publication and mention of the grant of the patent: **13.09.2017**
(21) Application number: 10824476.5
(22) Date of filing: 22.10.2010
(51) Int. Cl.: H04L 12/28

(54) **METHOD, DEVICE AND SYSTEM FOR PROPAGATING CONTENT SHARE**
VERFAHREN, VORRICHTUNG UND SYSTEM ZUR WEITERLEITUNG GEMEINSAM GENUTZTER INHALTE
PROCÉDÉ, DISPOSITIF ET SYSTÈME PERMETTANT DE PROPAGER LE PARTAGE DE CONTENU

(30) Priority: 22.10.2009 CN 200910236458
(43) Date of publication of application: 20.06.2012
(73) Proprietor: Huawei Technologies Co., Ltd., Longgang District Shenzhen, Guangdong 518129 (CN)
(72) Inventor: YANG, Zanfeng, Shenzhen Guangdong 518129 (CN)
(74) Representative: Isarpatent
(86) International application number: PCT/CN2010/077994
(87) International publication number: WO 2011/047635

(56) References cited:
- EP-A2- 1 594 028
- WO-A2-2009/016487
- CN-A- 1 697 412
- CN-A- 101 212 446
- WIRELESS APPLICATION PROTOCOL FORUM: "WAP Push Architectural Overview", INTERNET CITATION, 8 November 1999 (1999-11-08), XP002183436, Retrieved from the Internet: URL:http://www1.wapforum.org/tech/document s/WAP-165-PushArchOverview-19991108-a.pdf [retrieved on 2001-11-20]

## Description

### FIELD OF THE INVENTION

The present invention relates to the field of communications technologies, and in particular, to a method, a device and a system for content sharing and propagation.

### BACKGROUND OF THE INVENTION

Web 2.0 is also referred to as Internet 2.0, and represents a new era of network application, in which the network becomes a new platform, content is generated due to participation of each user, and personal content generated due to the participation forms a world of Web 2.0 through sharing among people.

Technologies of Web 2.0 mainly include: a blog (BLOG), an RSS (Really Simple Syndication, aggregation content, a simple manner of sharing content on line), an encyclopedia (Wiki), a social network (SNS), P2P and instant messaging (IM).

When a user accesses Internet content through a browser, finds content (for example, articles, pictures, and videos) the user is interested in, and wants to share the content with friends, a method for implementing content sharing in a first solution in the prior art is as follows: the user saves the content locally, and then notifies the friends of the saved specific URL link or specific content by means of such as a short message, a multimedia message, an Email, or printing.

The sharing method in the first solution in the prior art at least has the following disadvantages:
1. The user needs to actively use other methods (for example, by means such as a short message, a multimedia message, an Email, or printing), and many operations are required.
2. Most of mobile terminal browsers used by a user do not support paste and copy functions, resulting in inconvenience in operation.
3. The content required to be shared, such as a picture or a long paragraph of text, cannot be shared due to limitations of message sending technology of a mobile terminal and text quantity; and if the content required to be shared such as an audio and a video is shared through a multimedia message, the multimedia message needs to be made at a terminal, it is difficult to share the content or the operation is complicated due to the limitation of the size limit of the multimedia message.

A method for sharing the content in a second solution in the prior art is as follows: an Internet content provider adds a "share" link in the web page, so that the user can share the content with friends through an Email.

The sharing manner in the second solution in the prior art at least has the following disadvantages.
1. The Internet content provider needs to add a "share" link one by one for the content and provides a sharing function, which increases difficulty and a technical threshold of the sharing, and content provided for sharing is limited.
2. The sharing can only be implemented through an Email, and the sharing manner is single.

To sum up, the current solution for content sharing needs to locally save the content to be shared, and the shared content is limited by the sending manner; while it is very difficult to implement the method of adding the "share" link one by one by the Internet content provider, and the sharing manner is single. Document WO 2009/016487 A2 (QUINTARELLI GIUSEPPE STEFANO [IT]) 5 February 2009 (2009-02-05) discloses a method for content sharing and propagation.

### SUMMARY OF THE INVENTION

Embodiments of the present invention provide a method, a device and a system for content sharing and propagation.

Embodiments of the present invention are implemented through the following technical solutions.

An embodiment of the present invention provides a method for content sharing and propagation, where the method includes:
receiving, by a gateway, a service access request sent by a terminal, and obtaining content corresponding to the service access request from a network server;
determining content required to be shared in the content corresponding to the service access request according to a sharing rule and feeding back a sharing prompt to the terminal;
receiving a sharing request sent by the terminal; and
sending the content required to be shared according to the sharing request.

An embodiment of the present invention provides a device for implementing content sharing and propagation, where the device includes:
a first receiving unit, configured to receive a service access request sent by a terminal, and obtain content corresponding to the service access request from a network server;
a shared content determination and feedback unit, configured to determine content required to be shared in the content corresponding to the service access request according to a sharing rule and feed back a sharing prompt to the terminal;
a second receiving unit, configured to receive a sharing request sent by the terminal; and
a sending unit, configured to send the content required to be shared according to the sharing request.

An embodiment of the present invention provides a method for content sharing and propagation, where the system includes: a network server and a gateway, where
the network server is configured to provide a web page of content corresponding to a service access request to the gateway after receiving a service access request forwarded by the gateway; and
the gateway is configured to receive the service access request sent by a terminal, obtain content corresponding to the service access request from the network server, determine content required to be shared in the content corresponding to the service access request according to a sharing rule, feed back a sharing prompt to the terminal, and send the content required to be shared according to a sharing request after receiving the sharing request sent by the terminal.

It can be seen from the above technical solutions provided by the embodiments of the present invention that, through the embodiments of the present invention, the user is not required to locally download the content required to be shared, and the content provider is also not required to modify the content. A network side determines, according to the sharing rule, the content to be shared and returns a sharing prompt to the terminal, for example, providing a sharing link, so that the user can share the content with friends conveniently and instantly when the user browses Internet content.

### BRIEF DESCRIPTION OF THE DRAWINGS

To describe the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons skilled in the art can derive other drawings from the accompanying drawings without creative efforts.
FIG. 1 is a schematic structural diagram of a system for content sharing and propagation according to an embodiment of the present invention;
FIG. 2 is a schematic structural diagram of a gateway device according to an embodiment of the present invention;
FIG. 3 is a flow chart of a method for content sharing and propagation according to an embodiment of the present invention;
FIG. 4 is a flow chart of Example 1 of a method for content sharing and propagation according to the present invention;
FIG. 5 is a flow chart of Example 2 of a method for content sharing and propagation according to the present invention; and
FIG. 6 is a flow chart of Example 3 of a method for content sharing and propagation according to the present invention.

### DETAILED DESCRIPTION OF THE EMBODIMENTS

The technical solutions of the present invention are clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

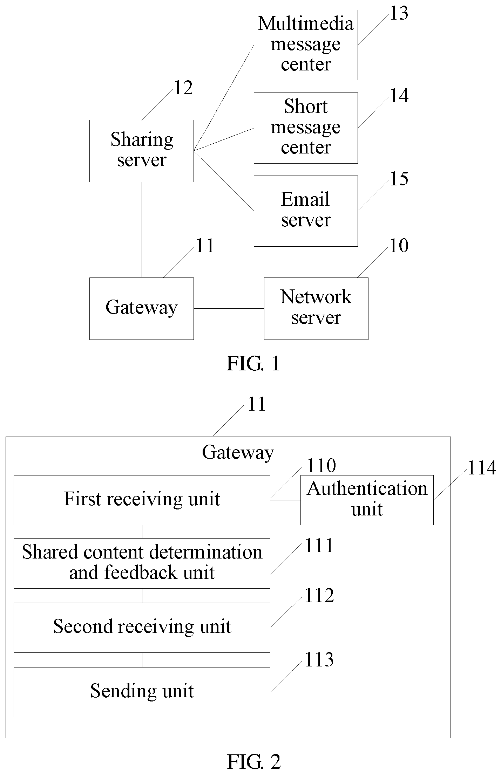

An embodiment of the present invention provides a system for content sharing and propagation. As shown in FIG. 1, the system includes: a network server 10 and a gateway 11.

The network server 10 is configured to provide content corresponding to a service access request to the gateway 11 after receiving the service access request sent by the gateway 11, where the content provided by the network server 10 may be provided to the gateway 11 in the form of a webpage. The content includes, but is not limited to, an article, a picture, a video and an audio.

The gateway 11 is configured to receive the service access request sent by a terminal, obtain content corresponding to the service access request from the network server 10, determine, according to a sharing rule, content required to be shared (which may also be construed as content that may be shared or suitable to be shared) in the content corresponding to the service access request, feed back a sharing prompt to the terminal to determine whether to share the content required to be shared with other users, and send the content required to be shared after receiving a sharing request sent by the terminal; for example, a manner of feeding back the sharing prompt to the terminal by the gateway 11 may include: adding a sharing link in a page including the content required to be shared and sending the page added with the sharing link to the terminal.

The gateway 11 may be further configured to authenticate the terminal.

The gateway 11 may be further configured to receive the service access request sent by the terminal, send the service access request to the network server 10, and request the corresponding content from the network server 10.

The sharing rule may be preset and stored by the gateway. The sharing rule includes, but is not limited to the following: conditions such as a terminal identity, a terminal type and a website address are combined to form rules, and it is determined that the content that complies with the rules required to be shared; or, the text content of a web page is used as the sharing rule, including, but not limited to, a word count of a text paragraph in a web page exceeding a certain amount; or, a label of a subject included in a markup language (HTML, XHTML, WML), such as h1-h2 in HTML, and it is determined that the content that complies with this rule required to be shared; or a sharing rule for a picture in a web page may be configured, including, but not limited to, that any one or any combination of a width limit, a height limit, a size limit, and a picture type of the picture, accordingly it is determined that the content that complies with the rules required to be shared.

It can be understood that, the sharing rules mentioned above are merely several examples listed by the inventors, and a sharing rule may be set according to the requirements in actual applications or multiple rules can be combined for use.

Optionally, the system may further include a sharing server 12.

The method for sending the content required to be shared by the gateway 11 may be as follows: the gateway 11 sends a notification to the sharing server 12, where the notification includes: content required to be shared, an identity of a terminal requesting sharing, and an identity of a sharing receiver (that is, an identity of a destination receiver of the content required to be shared).

The sharing server 12 is configured to receive the notification of the gateway 11 and send the content required to be shared to the sharing receiver. As shown in FIG. 1, the sharing server 12 may be connected to a multimedia message center 13, a short message center 14 or an Email (Email) server 15, and send the content required to be sent to the sharing receiver in a manner of a multimedia message, a short message or an Email. The embodiment of the present invention does not limit the manner in which the sharing server 12 sends the content required to be shared. In addition to the multimedia message, the short message or the Email listed above, other sending manners developed by persons skilled in the art should fall within the protection scope of the present invention. In the embodiment of the present invention, the content required to be shared is sent by using the sharing server 12, so that the problem of the sharing manner is single and sending manner of the content to be shared is limited is solved.

The embodiment of the present invention does not limit protocols applied between the devices, for example, the Hypertext Transport Protocol (HTTP, Hypertext Transport Protocol) may be applied between the terminal and the gateway; the HTTP protocol may be applied between the gateway and the network server; the HTTP protocol may also be applied between the gateway and the sharing server; an MM7 protocol may be applied between the sharing server and the multimedia message center; a Short Message Peer-To-Peer Protocol (SMPP, Short Message Peer-To-Peer Protocol) may be applied between the sharing server and the short message center; and an SMTP protocol may be applied between the sharing server and an Email server.

To implement the functions of the gateway, a structure of an embodiment of the gateway 11 is shown in FIG. 2, where the structure includes:
a first receiving unit 110, configured to receive a service access request sent by a terminal, and obtain content corresponding to the service access request from a network server;
a shared content determination and feedback unit 111, configured to determine content required to be shared in the content corresponding to the service access request according to the sharing rule and feed back the content to the terminal, where the shared content determination and feedback unit 111 may further include the following two sub-units: a determination sub-unit 1110 (not shown), configured to determine content required to be shared in the content corresponding to the service access request according to the sharing rule; and a feedback sub-unit 1111 (not shown), configured to add a sharing link in a web page including the content required to be shared, and send the page added with the sharing link to the terminal, and it can be understood that, the structure of the shared content determination and feedback unit 111 is not limited thereto; and
a second receiving unit 112, configured to receive a sharing request sent by the terminal; and
a sending unit 113, configured to send the content required to be shared.

The gateway device 11 may further include:
an authentication unit 114, configured to authenticate the terminal;

The gateway includes, but is not limited to, a Wireless Application Protocol (WAP, Wireless Application Protocol) gateway, a WEB gateway, an Internet Proxy, and a service control gateway.

Through the embodiment of the present invention, the user is not required to locally download the content required to be shared, and the content provider is also not required to modify the content. A network side determines the content to be shared (content that may be shared or content that is required to be shared) according to the sharing rule and returns a sharing prompt to the terminal for selection and acknowledgement, for example, providing a sharing link, so that the user can share the content with friends conveniently and instantly when the user browses Internet content. Moreover, the content sharing and transmission are implemented based on the gateway, thereby ensuring the security of a content sharing process.

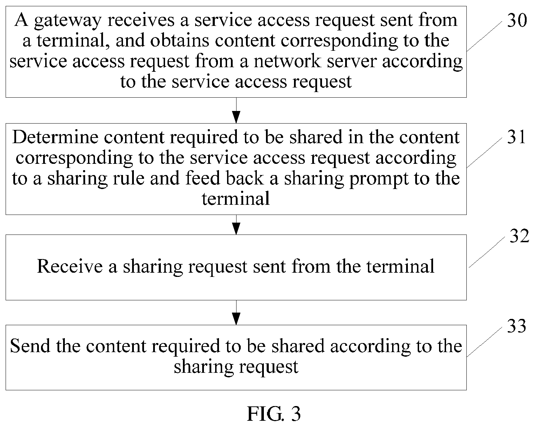

An embodiment of the present invention also provides a method for content sharing and propagation. As shown in FIG. 3, the method includes the following steps:
Step 30: A gateway receives a service access request sent by a terminal, and obtains content corresponding to the service access request from a network server.

Generally, the gateway may perform an authentication operation on an accessed terminal, that is, the gateway can obtain information about the terminal, and can determine whether the accessed terminal is legal according to the information of the terminal. Therefore, the method for content sharing and propagation in the embodiment of the present invention can ensure the security of the terminal requesting sharing.

The process that the gateway obtains the corresponding content from the network server that provides service content according to the service access request includes: after receiving the service access request sent by the terminal, the gateway sends the service access request to the network server, and receives content that corresponds to the service access request and is returned by the network server, where the network server generally provides the content corresponding to the service access request in the form of a web page.

Step 31: Determine content required to be shared in the content corresponding to the service access request according to a sharing rule and feed back a sharing prompt to the terminal.

After receiving the content that corresponds to the service access request and is provided by the network server, the gateway determines the content required to be shared according to the sharing rule. That is, the gateway judges whether the content provided by the network server meets sharing requirements, and determines the content required to be shared if the content meets the sharing requirements. The sharing rule includes, but is not limited to, the following: conditions such as a terminal identity, a terminal type and a website address are combined to form the rules, and it is determined that the content that complies with the rules required to be shared; or, the text content of a web page is used as the sharing rule, including, but not limited to, a word count of a text paragraph in a web page exceeding a certain amount; or, a label of a subject included in a markup language (HTML, XHTML, WML), such as h1-h2 in HTML, and it is determined that the content that complies with this rule required to be shared; or, a sharing rule for a picture in a web page may be configured, including, but not limited to, that any one or any combination of a width limit, a height limit, a size limit, and a picture type of the picture, and it is determined that the content that complies with the rules required to be shared.

If it is determined that the content is not required to be shared, the web page is directly provided to the terminal.

Step 32: Receive a sharing request sent by the terminal.

The sharing request may include an identity of a sharing receiver.

If the user determines that the content is required to be shared with friends, the terminal may send the sharing request through a sharing link, in which the sharing request includes an identity of a sharing receiver, that is, friends with whom the content is shared, and an identity of the sharing receiver may include, but is not limited to, an Email address and a phone number of the sharing receiver.

Step 33: Send the content required to be shared according to the sharing request.

For example, after receiving the sharing request, the gateway sends the content required to be shared that is determined in step 31, the identity of the terminal requesting sharing, and the identity of the sharing receiver to the sharing server, and then the sharing server sends the content required to be shared to the sharing receiver. The manner of the sharing server sending the content required to be shared to the sharing receiver may include, but is not limited to: sending a multimedia message, a short message or an Email through a multimedia message center, a short message center or an Email server.

Through the embodiment of the present invention, the user is not required to locally download the content required to be shared, and the content provider is also not required to modify the content. A network side determines the content to be shared according to the sharing rule, and feeds back a sharing prompt to the terminal, for example, providing a sharing link, so that the user can share the content with friends conveniently and instantly when the user browses Internet content. Moreover, the content sharing and propagation are implemented based on the gateway, thereby ensuring the security of a content sharing process.

For the convenience of understanding the present invention, the method described according to the foregoing embodiment is illustrated in detail in the following with specific examples.

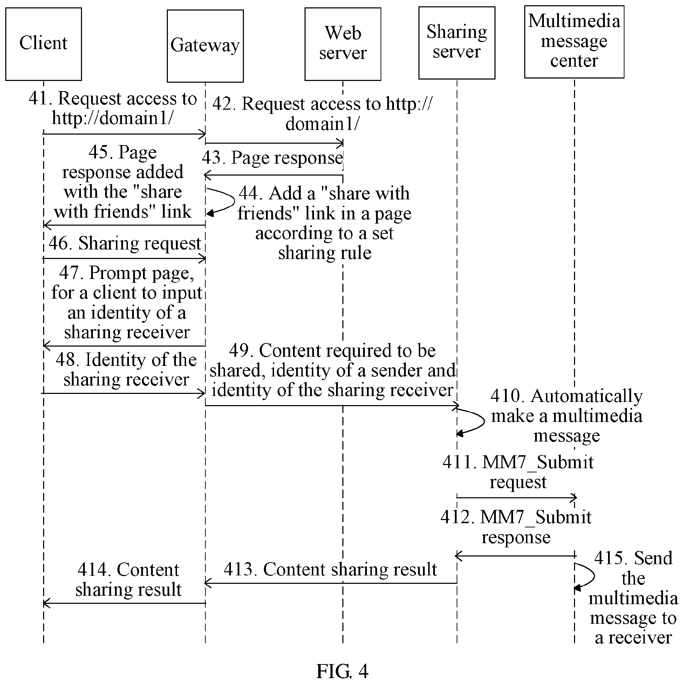

Example 1: Content required to be shared is sent through a multimedia message. As shown in FIG. 4, the sending method includes the following steps:
Step 41: A gateway receives a service access request from a client, requesting access to http://domain1/.
Step 42: The gateway forwards the request to a Web server.
Step 43: Receive a page response returned by the Web server.
Step 44: The gateway adds a "share with friends" link in the page response according to a set sharing rule.
Step 45: The gateway returns the page response added with the "share with friends" link to the client.
Step 46: The gateway receives a sharing request sent by the client.

If a user needs to share specific content with friends, the user may click the "share with friends" link, and then the gateway may receive the sharing request.
Step 47: The gateway returns a prompt page to enable the client to input an identity of a sharing receiver (for example, a phone number or an Email address).
Step 48: Receive the identity of the sharing receiver submitted by the client.
Step 49: The gateway sends the content required to be shared, the identity of the sender and the identity of the sharing receiver to a sharing server.
Step 410: The sharing server automatically makes a multimedia message of the content required to be shared.
Step 411: The sharing server submits the multimedia message to a multimedia message center by sending an MM7_Submit request.
Step 412: The multimedia message center returns a multimedia message submit response.
Step 413: The sharing server returns a content sharing result to the gateway.
Step 414: The gateway returns the content sharing result to the client.
Step 415: The multimedia message center sends the multimedia message to the sharing receiver according to the identity of the sharing receiver.

In this example, the user can share the content with friends conveniently and instantly when the user browses Internet content, the user is not required to locally download the content required to be shared, and the content provider is also not required to modify the content.

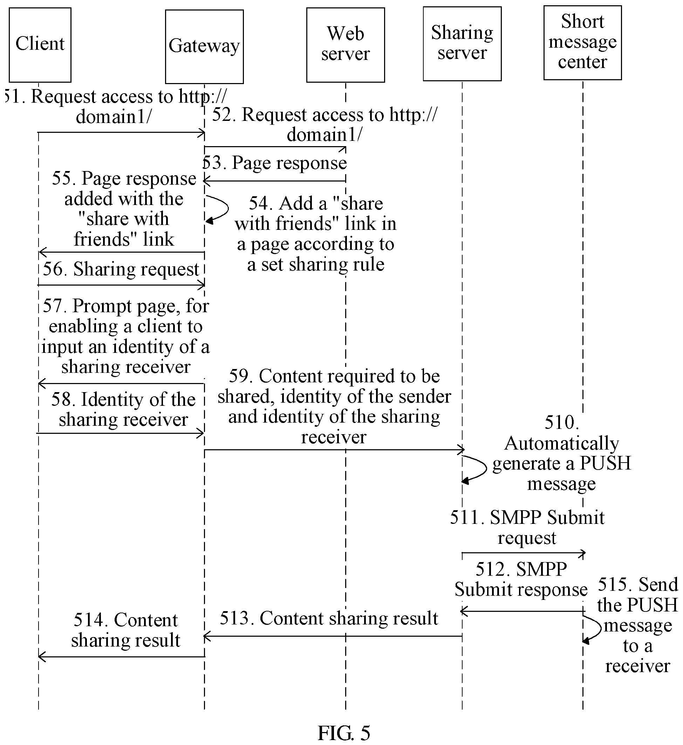

Example 2: Content required to be shared is sent through a short message. As shown in FIG. 5, the sending method includes the following steps:
Step 51: A gateway receives a service access request from a client, requesting access to http://domain1/.
Step 52: The gateway forwards the request to a Web server.
Step 53: Receive a page response returned by the Web server.
Step 54: The gateway adds a "share with friends" link in the page response according to a set sharing rule.
Step 55: The gateway returns the page response added with the "share with friends" link to the client.
Step 56: The gateway receives a sharing request sent by the client.

If the user needs to share specific content with friends, the user may click the "share with friends" link, and the gateway may receive the sharing request.
Step 57: The gateway returns a prompt page to enable the client to input an identity of a sharing receiver (for example, a phone number or an Email address).
Step 58: Receive the identity of the sharing receiver submitted by the client.
Step 59: The gateway sends the content required to be shared, an identity of a sender and the identity of the sharing receiver to a sharing server.
Step 510: The sharing server automatically makes a PUSH short message of the content to be shared.
Step 511: The sharing server submits the PUSH short message to a short message center through an SMPP Submit request.
Step 512: The short message center returns a short message submit response.
Step 513: The sharing server returns a content sharing result to the gateway.
Step 514: The gateway returns the content sharing result to the client.
Step 515: The short message center sends the PUSH short message to the receiver.

In this example, the user can share the content with friends conveniently and instantly when the user browses Internet content, the user is not required to locally download the content required to be shared, and the content provider is also not required to modify the content.

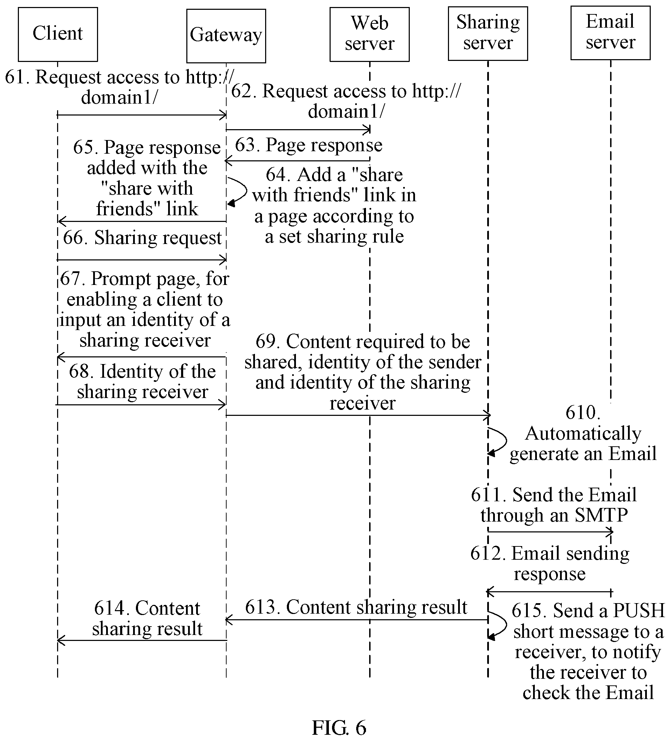

Example 3: Content required to be shared is sent through an Email. As shown in FIG. 6, the sending method includes the following steps:
Step 61: A gateway receives a service access request from a client to request access to http://domain1/.
Step 62: The gateway forwards the request to a Web server.
Step 63: Receive a page response returned by the Web server.
Step 64: The gateway adds a "share with friends" link in a page according to a set sharing rule.
Step 65: The gateway returns the page response added with the "share with friends" link to the client.
Step 66: The gateway receives a sharing request sent by the client.

If the user needs to share specific content with friends, the user may click the "share with friends" link, and the gateway may receive the sharing request.
Step 67: The gateway returns a prompt page to enable the client to input an identity of a sharing receiver (for example, a phone number or an Email address).
Step 68: Receive the identity of the sharing receiver submitted by the client.
Step 69: The gateway sends the content required to be shared, an identity of a sender and the identity of the sharing receiver to a sharing server.
Step 610: The sharing server automatically makes an Email of the content to be shared.
Step 611: The sharing server sends the Email to an Email server through an SMTP.
Step 612: The Email server returns an Email sending result.
Step 613: The sharing server returns a content sharing result to the gateway.
Step 614: The gateway returns the content sharing result to the client.
Step 615: The sharing server sends a PUSH short message to a receiver, to notify the receiver to check an Email box.

In this example, the user can share the content with friends conveniently and instantly when the user browses Internet content, the user is not required to locally download the content required to be shared, and the content provider is also not required to modify the content.

To sum up, through the embodiments of the present invention, the user is not required to locally download the content required to be shared, and the content provider is also not required to modify the content. A network side determines the content to be shared according to the sharing rule, and returns a sharing prompt to the terminal, so that the user can share the content with friends conveniently and instantly when the user browses Internet content. Moreover, the content sharing and propagation are implemented based on the gateway, thereby ensuring the security of a content sharing process.

Persons skilled in the art should understand that all or a part of the steps of the method according to the embodiments of the present invention may be implemented by a program instructing relevant hardware. The program may be stored in a computer readable storage medium, such as a Read-Only Memory (ROM for short), a Read-Access Memory (RAM for short), a magnetic disk or an optical disk.

The above descriptions are merely exemplary embodiments of the present invention, but the protection scope of the present invention is not limited hereto. The protection scope of the present invention is subject to the protection scope of the claims.

## Claims

1. A method for content sharing and propagation, comprising:
receiving (30,) by a gateway, a service access request sent by a terminal, and obtaining content corresponding to the service access request from a network server;
determining (31) content required to be shared in the content corresponding to the service access request according to a sharing rule and feeding back a sharing prompt to the terminal;
receiving (32) a sharing request sent by the terminal; and
sending (33) the content required to be shared according to the sharing request.

2. The method according to claim 1, further comprising:
authenticating, by the gateway, the terminal.

3. The method according to claim 1, wherein the sharing rule comprises any one or any combination of:
combining conditions of a terminal identity, a terminal type and a website address as the sharing rule; or
a word count of a text paragraph in a web page exceeding a certain amount; or,
a label of a subject included in a markup language; or,
a sharing rule for a picture in the web page, wherein the sharing rule comprises any one or any combination of a width limit, a height limit, a size limit and a picture type of the picture.

4. The method according to claim 1, wherein the feeding back the sharing prompt to the terminal comprises:
adding a sharing link in a web page comprising the content required to be shared, and sending the web page added with the sharing link to the terminal.

5. The method according to claim 1, wherein the sharing request comprises an identity of a sharing receiver.

6. The method according to claim 5, wherein the sending the content required to be shared according to the sharing request comprises:
providing, by the gateway, an identity of the terminal, the identity of the sharing receiver, and the content required to be shared to a sharing server, and sending, by the sharing server, the content required to be shared to the sharing receiver according to the identity of the sharing receiver.

7. The method according to claim 6, wherein the sharing server sends the content required to be shared through a multimedia message center, a short message center or an Email server.

8. A gateway(11), comprising:
a first receiving unit(110), configured to receive a service access request sent by a terminal, and obtain content corresponding to the service access request from a network server;
a shared content determination and feedback unit(111), configured to determine content required to be shared in the content corresponding to the service access request according to a sharing rule and feed back a sharing prompt to the terminal;
a second receiving unit(112), configured to receive a sharing request sent by the terminal; and
a sending unit(113), configured to send the content required to be shared according to the sharing request.

9. The gateway according to claim 8, wherein the shared content determination and feedback unit further comprises:
a determination sub-unit, configured to determine content required to be shared in the content corresponding to the service access request according to the sharing rule; and
a feedback sub-unit, configured to add a sharing link in a page comprising the content required to be shared, and sending the page added with the sharing link to the terminal.

10. The gateway according to claim 8 or 9, further comprising:
an authentication unit, configured to authenticate the terminal.

11. A system for content sharing and propagation, comprising: a network server (10) and a gateway(11), wherein the network server (10) is configured to provide a page of content corresponding to a service access request to the gateway (11) after receiving a service access request forwarded by the gateway; and the gateway is configured to receive the service access request sent by a terminal, obtain content corresponding to the service access request from the network server, determine content required to be shared in the content corresponding to the service access request according to a sharing rule, feed back a sharing prompt to the terminal, and send the content required to be shared according to a sharing request after receiving the sharing request sent by the terminal.

12. The system according to claim 11, further comprising: a sharing server, wherein
the sharing server is connected to the gateway, and is configured to send the content required to be shared to a sharing receiver.

13. The system according to claim 12, wherein the sharing server is connected to a multimedia message center, a short message center or an Email server, and sends, through a multimedia message, a short message, or an Email, the content required to be shared.

## Patentansprüche

1. Verfahren zum Freigeben und Verbreiten von Inhalt, umfassend:
Empfangen (30), durch ein Gateway, einer durch ein Endgerät gesendeten Dienstzugangsanfrage und Erhalten von Inhalt, der der Dienstzugangsanfrage entspricht, von einem Netzwerkserver;
Bestimmen (31) von Inhalt, der freigegeben werden soll, im Inhalt, der der Dienstzugangsanfrage entspricht, gemäß einer Freigaberegel und Rückmelden einer Freigabeaufforderung an das Endgerät;
Empfangen (32) einer durch das Endgerät gesendeten Freigabeanfrage und Senden (33) des Inhalts, der freigegeben werden soll, gemäß der Freigabeanfrage.

2. Verfahren nach Anspruch 1, ferner umfassend:
Authentifizieren, durch das Gateway, des Endgeräts.

3. Verfahren nach Anspruch 1, wobei die Freigaberegel ein beliebiges oder eine beliebige Kombination des Folgenden umfasst:
Kombinieren von Bedingungen einer Endgeräteidentität, einer Endgeräteart und einer Website-Adresse als die Freigaberegel oder
eine Wortanzahl eines Textparagraphen auf einer Webseite, die eine bestimmte Anzahl überschreitet; oder
ein Tag eines Elements, das in einer Markup-Sprache enthalten ist; oder
eine Freigaberegel für ein Bild auf der Webseite, wobei die Freigaberegel eine Breitenbegrenzung und/oder eine Höhenbegrenzung und/oder eine Größenbegrenzung und/oder eine Bildart des Bilds umfasst.

4. Verfahren nach Anspruch 1, wobei das Rückmelden der Freigabeaufforderung an das Endgerät Folgendes umfasst:
Hinzufügen eines Freigabelinks auf einer Webseite, die den Inhalt, der freigegeben werden soll, umfasst, und Senden der Webseite mit dem hinzugefügten Freigabelink zum Endgerät.

5. Verfahren nach Anspruch 1, wobei die Freigabeanfrage eine Identität eines Freigabeempfängers umfasst.

6. Verfahren nach Anspruch 5, wobei das Senden des Inhalts, der freigegeben werden soll, gemäß der Freigabeanfrage Folgendes umfasst:
Bereitstellen, durch das Gateway, einer Identität des Endgeräts, der Identität des Freigabeempfängers und des Inhalts, der freigegeben werden soll, an einen Freigabeserver und Senden, durch den Freigabeserver, des Inhalts, der freigegeben werden soll, zum Freigabeempfänger gemäß der Identität des Freigabeempfängers.

7. Verfahren nach Anspruch 6, wobei der Freigabeserver den Inhalt, der freigegeben werden soll, über eine Multimedia-Nachrichtenzentrale, eine Kurznachrichtenzentrale oder einen E-Mail-Server sendet.

8. Gateway (11), umfassend:
eine erste Empfangseinheit (110), die zum Empfangen einer durch ein Endgerät gesendeten Dienstzugangsanfrage und zum Erhalten von Inhalt, der der Dienstzugangsanfrage entspricht, von einem Netzwerkserver konfiguriert ist;
eine Bestimmungs- und Rückmeldungseinheit (111) für freigegebenen Inhalt, die zum Bestimmen von Inhalt, der freigegeben werden soll, im Inhalt, der der Dienstzugangsanfrage entspricht, gemäß einer Freigaberegel und zum Rückmelden einer Freigabeaufforderung an das Endgerät konfiguriert ist;
eine zweite Empfangseinheit (112), die zum Empfangen einer durch das Endgerät gesendeten Freigabeanfrage konfiguriert ist; und
eine Sendeeinheit (113), die zum Senden des Inhalts, der freigegeben werden soll, gemäß der Freigabeanfrage konfiguriert ist.

9. Gateway nach Anspruch 8, wobei die Bestimmungs- und Rückmeldungseinheit für freigegebenen Inhalt ferner Folgendes umfasst:
eine Bestimmungsuntereinheit, die zum Bestimmen von Inhalt, der freigegeben werden soll, im Inhalt, der der Dienstzugangsanfrage entspricht, gemäß der Freigaberegel konfiguriert ist; und
eine Rückmeldungsuntereinheit, die zum Hinzufügen eines Freigabelinks auf einer Seite, die den Inhalt, der freigegeben werden soll, umfasst, und zum Senden der Seite mit dem hinzugefügten Freigabelink zum Endgerät konfiguriert ist.

10. Gateway nach Anspruch 8 oder 9, ferner umfassend:
eine Authentifizierungseinheit, die zum Authentifizieren des Endgeräts konfiguriert ist.

11. System zum Freigeben und Verbreiten von Inhalt, das einen Netzwerkserver (10) und ein Gateway (11) umfasst, wobei
der Netzwerkserver (10) zum Bereitstellen einer Seite mit Inhalt, der einer Dienstzugangsanfrage entspricht, an das Gateway (11), nachdem eine durch das Gateway weitergeleitete Dienstzugangsanfrage empfangen wird, konfiguriert ist; und das Gateway zum Empfangen der durch ein Endgerät gesendeten Dienstzugangsanfrage, zum Erhalten von Inhalt, der der Dienstzugangsanfrage entspricht, vom Netzwerkserver, zum Bestimmen von Inhalt, der freigegeben werden soll, im Inhalt, der der Dienstzugangsanfrage entspricht, gemäß einer Freigaberegel, zum Rückmelden einer Freigabeaufforderung an das Endgerät und zum Senden des Inhalts, der freigegeben werden soll, gemäß einer Freigabeanfrage, nachdem die durch das Endgerät gesendete Freigabeanfrage empfangen wird, konfiguriert ist.

12. System nach Anspruch 11, das ferner einen Freigabeserver umfasst, wobei der Freigabeserver mit dem Gateway verbunden ist und zum Senden des Inhalts, der freigegeben werden soll, zu einem Freigabeempfänger konfiguriert ist.

13. System nach Anspruch 12, wobei der Freigabeserver mit einer Multimedia-Nachrichtenzentrale, einer Kurznachrichtenzentrale oder einem E-Mail-Server verbunden ist und den Inhalt, der freigegeben werden soll, über eine Multimedia-Nachricht, eine Kurznachricht oder eine E-Mail sendet.

## Revendications

1. Procédé de partage et de propagation de contenu, comportant les étapes consistant à :
faire recevoir (30), par une passerelle, une demande d'accès à un service émise par un terminal, et obtenir un contenu correspondant à la demande d'accès au service à partir d'un serveur de réseau ;
déterminer (31) un contenu dont le partage est nécessaire dans le contenu correspondant à la demande d'accès au service selon une règle de partage et renvoyer une invite de partage au terminal ;
recevoir (32) une demande de partage émise par le terminal ; et
émettre (33) le contenu dont le partage est nécessaire d'après la demande de partage.

2. Procédé selon la revendication 1, comportant en outre l'étape consistant à :
faire authentifier le terminal par la passerelle.

3. Procédé selon la revendication 1, la règle de partage comportant un élément quelconque ou une combinaison quelconque parmi :
la combinaison de conditions d'une identité de terminal, d'un type de terminal et d'une adresse de site web en tant que règle de partage ; ou
un nombre de mots d'un paragraphe de texte dans une page web dépassant une certaine quantité ; ou
une étiquette d'un sujet compris dans un langage de balisage ; ou
une règle de partage pour une image dans la page web, la règle de partage comportant un élément quelconque ou une combinaison quelconque parmi une limite de largeur, une limite de hauteur, une limite de taille et un type d'image de l'image.

4. Procédé selon la revendication 1, le renvoi de l'invite de partage au terminal comportant les étapes consistant à :
ajouter un lien de partage dans une page web comportant le contenu dont le partage est nécessaire, et envoyer au terminal la page web à laquelle a été ajouté le lien de partage.

5. Procédé selon la revendication 1, la demande de partage comportant une identité d'un récepteur de partage.

6. Procédé selon la revendication 5, l'émission du contenu dont le partage est nécessaire d'après la demande de partage comportant les étapes consistant à :
faire fournir, par la passerelle, une identité du terminal, l'identité du récepteur de partage et le contenu dont le partage est nécessaire à un serveur de partage, et faire envoyer, par le serveur de partage, le contenu dont le partage est nécessaire au récepteur de partage d'après l'identité du récepteur de partage.

7. Procédé selon la revendication 6, le serveur de partage émettant le contenu dont le partage est nécessaire via un centre de messages multimédia, un centre de messages courts ou un serveur de courriel.

8. Passerelle (11), comportant :
une première unité (110) de réception, configurée pour recevoir une demande d'accès à un service émise par un terminal, et obtenir un contenu correspondant à la demande d'accès au service à partir d'un serveur de réseau ;
une unité (111) de détermination de contenu partagé et de renvoi, configurée pour déterminer un contenu dont le partage est nécessaire dans le contenu correspondant à la demande d'accès au service selon une règle de partage et renvoyer une invite de partage au terminal ;
une deuxième unité (112) de réception, configurée pour recevoir une demande de partage émise par le terminal ; et
une unité (113) d'émission, configurée pour émettre le contenu dont le partage est nécessaire d'après la demande de partage.

9. Passerelle selon la revendication 8, l'unité de détermination de contenu partagé et de renvoi comportant en outre :
une sous-unité de détermination, configurée pour déterminer un contenu dont le partage est nécessaire dans le contenu correspondant à la demande d'accès au service selon la règle de partage ; et
une sous-unité de renvoi, configurée pour ajouter un lien de partage dans une page comportant le contenu dont le partage est nécessaire, et envoyer au terminal la page à laquelle a été ajouté le lien de partage.

10. Passerelle selon la revendication 8 ou 9, comportant en outre :
une unité d'authentification, configurée pour authentifier le terminal.

11. Système de partage et de propagation de contenu, comportant :
un serveur (10) de réseau et une passerelle (11), le serveur (10) de réseau étant configuré pour fournir à la passerelle (11) une page de contenu correspondant à une demande d'accès à un service après avoir reçu une demande d'accès à un service transmise par la passerelle ; et
la passerelle étant configurée pour recevoir la demande d'accès au service émise par un terminal, obtenir un contenu correspondant à la demande d'accès au service à partir du serveur de réseau, déterminer un contenu dont le partage est nécessaire dans le contenu correspondant à la demande d'accès au service selon une règle de partage, renvoyer une invite de partage au terminal, et émettre le contenu dont le partage est nécessaire d'après une demande de partage après avoir reçu la demande de partage émise par le terminal.

12. Système selon la revendication 11, comportant en outre : un serveur de partage, le serveur de partage étant relié à la passerelle, et étant configuré pour envoyer le contenu dont le partage est nécessaire à un récepteur de partage.

13. Système selon la revendication 12, le serveur de partage étant relié à un centre de messages multimédia, un centre de messages courts ou un serveur de courriel, et émettant, via un message multimédia, un message court ou un courriel, le contenu dont le partage est nécessaire.
